# EUROPÄISCHE PATENTSCHRIFT

(11) **EP 2 534 582 B1**
(45) Veröffentlichungstag und Bekanntmachung des Hinweises auf die Patenterteilung: **27.12.2017**
(21) Anmeldenummer: 11706495.6
(22) Anmeldetag: 08.02.2011
(51) Int. Cl.: G06F 13/42, H04L 25/49, H04L 12/403

(54) **NEUARTIGE SCHALTUNG UND METHODE ZUR KOMMUNIKATION ÜBER EINE EINZELNE LEITUNG**
NOVEL CIRCUIT AND METHOD FOR COMMUNICATING VIA A SINGLE LINE
CIRCUIT D'UN GENRE NOUVEAU ET PROCÉDÉ DE COMMUNICATION PAR LE BIAIS D'UNE LIGNE UNIQUE

(30) Priorität: 07.02.2011 DE 102011003729; 08.02.2010 DE 102010007283
(43) Veröffentlichungstag der Anmeldung: 19.12.2012
(73) Patentinhaber: Robert Bosch GmbH, 70442 Stuttgart (DE)
(72) Erfinder: RETTIG, Rasmus, 72760 Reutlingen (DE); KALB, Franziska, 95686 Fichtelberg (DE)
(86) Internationale Anmeldenummer: PCT/EP2011/051807
(87) Internationale Veröffentlichungsnummer: WO 2011/095635

(56) Entgegenhaltungen:
- DE-A1- 10 329 707
- DE-A1-102005 014 783
- DE-A1-102008 062 865

## Beschreibung

### Stand der Technik

Aus der Literatur sind verschiedene Verfahren und Protokolle für die Kommunikation zwischen integrierten Schaltungen, beispielsweise zum Zwecke der Konfiguration bekannt.

Serielle Schnittstellen, wie z.B. SPI, übertragen die Daten seriell, nutzen aber regelmäßig mehrere Leitungen, insbesondere neben der Datenleitung eine weitere zur Synchronisation. So ist im Fall der SPI Schnittstelle jeder Teilnehmer an die folgenden drei gemeinsamen Leitungen angeschlossen: SDO (Serial Data Out) bzw. MISO (Master in Slave out), SDI (Serial Data In) bzw. MOSI (Master out Slave in) und SCK (Serial Clock). Darüber hinaus besteht eine Verbindung der Teilnehmer zu einer gemeinsamen Masse.

Die Schnittstelle des I2C-Bus, der beispielsweise in der Patentanmeldung WO 03/005211 A2 beschrieben wird, besteht aus zwei Leitungsanschlüssen sowie einer Masseverbindung mit der Möglichkeit, selektiv einzelne Teilnehmer auf dem Bus anzusprechen.

Die Patentanmeldung US 2008/0282005 A1 beschreibt ein Verfahren zur Kommunikation zwischen integrierten Schaltkreisen, das auf einer existierenden physikalischen Schicht des OSI-Modelles aufsetzt und in der zugehörigen Kommunikationsschicht zusätzlich z.B. Konfigurationsinformationen bereitstellt. Auf diese Weise werden zusätzliche Verbindungen eingespart.

Die Patentanmeldung DE 0588274 A1 beschreibt ein weiteres Verfahren zur Kommunikation auf einer Leitung: Der Sender gibt die Kommunikationsleitung frei, der Empfänger sendet Pulse, die der Sender mitzählt. Gleichzeitig prüft der Empfänger, ob der Puls korrekt auf der Leitung ausgegeben wurde. Beim Erreichen der zu übertragenden Zahl blockiert der Sender erneut die Übertragungsleitung. Der Empfänger kennt die Zahl an Pulsen und hat damit die Zahl empfangen.

Die weitere Patentanmeldung US 5668716 A beschreibt einen Aufbau zur Eindrahtkommunikation durch einen Adapter, der die Signale auf eine serielle Zweidraht-Schnittstelle umsetzt.

In der Anmeldung GB 2295039 A wird eine serielle Schnittstelle mit einer Leitung beschrieben, die voraussetzt, dass die Taktleitungen beider Schaltkreise gekoppelt und ggf. passend abgeschlossen werden.

In der Patentanmeldung US 5864872 A wird eine serielle Kommunikation über eine Leitung beschrieben, bei welcher die Leitung durch den Empfänger vorgespannt wird und der Sender diese in einem definierten Zeitintervall entweder nach Masse zieht oder in ihrem vorgespannten Zustand belässt. Der Empfänger prüft den Status der Leitung und erkennt so, ob "0" oder "1" gesendet wurde.

Die Patentanmeldung DE 10 2008 865 A1 beschreibt ein Übertragungsverfahren für logische Informationen von einem Sender zu einem Empfänger über eine einzelne Leitung. Der Empfänger überträgt ein Taktsignal auf einer Leitung und der Sender ein Datensignal, welches dem Taktsignal überlagert ist. Der Empfänger ermittelt aus dem Datensignal die zu empfangene logische Information.

### Offenbarung der Erfindung

Die vorliegende Erfindung beschreibt eine Schnittstelle zur Kommunikation zwischen zwei integrierten Schaltungen auf einer einzelnen Leitung z.B. zum Übertragen von Konfigurationsinformationen bei der Initialisierung eines Steuergerätes.

Eine Methode, wie sie hier beschrieben wird, kann zur Übertragung von Konfigurationsdaten eingesetzt werden, z.B. zur Konfiguration von CAN Transceivern oder anderen integrierten Schaltkreisen, die über keinen eigenen nicht-flüchtigen Speicher verfügen und daher beim Einschalten Konfigurationsdaten erhalten müssen.

### Vorteile der Erfindung

Die Aufgabe der Erfindung wird durch die Merkmale der unabhängigen Ansprüche gelöst. Vorteilhafte Weiterbildungen sind den Unteransprüchen zu entnehmen. Vorteilhafterweise überträgt bei dem erfindungsgemäßen Verfahren ein Sender logische Informationen zu einem Empfänger über eine einzelne Leitung, durch die der Empfänger mit dem Sender verbunden ist.

Der Empfänger legt ein erstes Signal auf die Leitung, welches abwechselnd rezessiven und dominanten Pegeln besteht, und der Sender legt ein zweites Signal auf die Leitung, wobei das zweite Signal vom Sender wenigstens in den Abschnitten, in denen das erste Signal einen rezessiven Pegel aufweist, auf der Leitung überlagert wird, und das zweite Signal aus einer Folge von rezessiven und dominanten Pegeln besteht. Dies hat den Vorteil, dass sowohl Sender als auch Empfänger auf den Bus zugreifen können und der Empfänger aus dem zweiten Signal die zu empfangende logische Information ermitteln kann.

In einer vorteilhaften Ausprägung werden als logische Informationen Konfigurationsinformationen zur Initialisierung eines Steuergerätes oder Bauelementes oder einer Busanschlusseinheit übertragen.

In einer besonders bevorzugten, einfach darzustellenden Aufprägung besteht das erste Signal aus einer Folge mit vorgegebener oder vorgebbarer Anzahl von Rechteckpulsen, wobei die Dauer der rezessiven und/oder die Dauer der dominanten Leitungspegel innerhalb der Folge ungefähr konstant ist.

Es ist von Vorteil, wenn der Sender nach Empfang einer vorgegebenen oder vorgebbaren Anzahl von rezessiven und/oder dominanten Pegeln des ersten Signales mit der Überlagerung des zweiten Signales beginnt.

Ein Vorteil der dargestellten Erfindung im Unterschied zu I2C und SPI ist, dass nur eine einzelne Leitung benötigt wird und nicht auf bereits existierende Protokolle oder Kommunikationsschichten aufgesetzt wird.

Weiterhin ist es von Vorteil, dass es keiner zusätzlicher Takt- oder Synchronisationsleitungen zur Umsetzung des Verfahrens bedarf, wodurch Kosten gespart werden können.

Der Takt beider Schaltkreise bedarf keinerlei Synchronisation, was ein weiterer Vorteil hinsichtlich Einsetzbarkeit, Robustheit und Aufwand zum Einsatz des Verfahrens ist. Vielmehr darf die Übertragungsrate, welche erfindungsgemäß der Empfänger vorgibt, während der Übertragung schwanken. Dies ist von Vorteil, da keine Anforderungen an einen für die Kommunikation genutzten Taktgeber bestehen.

Auch muss die Übertragungsrate des Empfängers dem Sender nicht bekannt sein, wodurch der Konfigurationsaufwand zum Herstellen beziehungsweise Einrichten der Kommunikation vorteilhaft gesenkt wird.

Die Erfindung erlaubt also eine einfache, preisgünstige und robuste Realisierung einer Eindrahtschnittstelle z.B. zur Konfiguration eines Bauelementes oder Steuergerätes, ohne das Erfordernis einer Synchronisation, Konfiguration oder Einstellung des Übertragungstaktes. Die Schnittstelle ist im genannten Sinne selbstsynchronisierend, und dies auch auf zeitlich veränderliche Übertragungsraten.

### Zeichnungen

Die Erfindung wird nachfolgend anhand der Zeichnungen näher erläutert.
Figur 1 zeigt beispielhaft die Sendedaten der beiden Teinehmer des erfindungsgemäßen Verfahrens.
Figur 2 zeigt schematisch ein Beispiel für eine Schaltung zur Durchführung des erfindungsgemäßen Verfahrens.

### Beschreibung der Ausführungsbeispiele

Im Weiteren werden Ausführungsbeispiele für das erfindungsgemäßes Verfahren und die Vorrichtung beschrieben. Diese konkreten Beispiele werden zur Erläuterung der Ausführung eingesetzt, beschränken aber nicht den Umfang des Erfindungsgedankens.

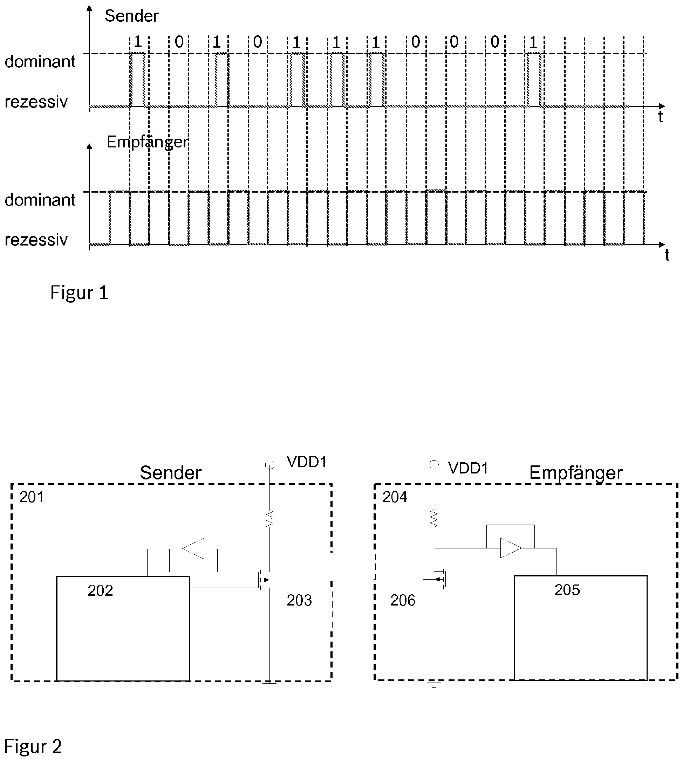

Grundlegend für das erfindungsgemäße Verfahren ist die Synchronisation beider Schaltkreise auf der Übertragungsleitung, wobei die Synchronisation über das Senden eines Taktsignales durch den Empfänger erfolgt. Dies ist in Figur 1 beispielhaft dargestellt. Im oberen Teil der Zeichnung ist das vom Sender auf die Leitung gesendete Signal dargestellt, im unteren Teil ist das vom Empfänger gesendete Signal gegenübergestellt. Die Zeitachsen beider Darstellungen sind übereinstimmend.

Der Empfänger-Baustein setzt, wie in Figur 1 dargestellt, ein näherungsweise rechteckförmiges Taktsignal auf der Übertragungsleitung ab. Der Sender-Baustein detektiert dieses Taktsignal und setzt sein zu übertragendes Signal jeweils in den rezessiven Phasen des vom Empfänger eintreffenden Taktsignals ab. Die Sendesignale der beiden Bausteine bestehen - in Analogie zum CAN Bus - aus dominanten und rezessiven Signalen. Das bedeutet, dass bei gleichzeitigem Senden mehrerer Bausteine auf der Leitung, im dargestellten Fall also bei gleichzeitigem Senden von Sender und Empfänger, beispielsweise aufgrund der physikalischen Randbedingungen der Signalgenerierung das dominante Signal "gewinnt". Nur wenn beide Teilnehmer, also Sender und Empfänger, ein rezessives Signal senden, bleibt der Bus auf dem rezessiven Pegel. Sendet wenigstens ein Teilnehmer ein dominantes Signal, ist der Bus auf dominantem Pegel. Interpretiert man den dominanten Leitungspegel als logische TRUE- und den rezessiven Leitungspegel als logische FALSE-Bedingung, so ist das tatsächlich auf der Leitung vorliegende Signal eine ODER-Verknüpfung der beiden von Sender und Empfänger ausgesandten Signale.

Auf diese Weise überträgt der Sender in der Lücke zwischen den dominanten Takt-Bits des Empfängers bitweise seine Daten, welche eine an den Empfänger zu übertragende logische Information darstellen. Der Sender beobachtet - wie bereits beschrieben - die Übertragungsleitung und setzt seine zu übertragenden Bits in die "rezessiven Lücken" des Taktsignals. Der Empfänger-Baustein prüft in den rezessiven Phasen des von ihm gesendeten Takt-Signals die Leitung auf einen Flankenwechsel von rezessiv nach dominant. Falls vom Empfänger-Baustein ein solcher Flankenwechsel detektiert wird, wird dieser beispielsweise als logische Eins interpretiert. Falls vom Empfänger kein Flankenwechsel bis zum Beginn des nächsten dominanten Takt-Bits gemessen wird, wird dies als übertragene logische Null gewertet.

Je nach physikalischer Ausbildung des Busses und nach Ausprägung des Übertragungsprotokolles können rezessive Bits auch als Eins und dominante Bits als Null dargestellt beziehungsweise interpretiert werden (Invertierung). Die vom Sender zum Empfänger übertragenen Bits können nach irgendeinem beliebigen Verfahren zu Datenwörtern zusammengesetzt, zum Beschreiben von Registern im Empfänger verwendet, oder anderweitig im Empfänger verarbeitet und / oder gespeichert werden.

Das Taktsignal kann, wie in Figur 1 dargestellt, aus gleich langen dominanten und rezessiven Phasen bestehen, es ist aber auch ein Taktsignal möglich, bei welchem die dominanten Phasen kürzer oder länger als die rezessiven Phasen sind. Auch ein unregelmäßiges Signal mit abwechselnd dominanten und rezessiven Pegeln ist für das Verfahren geeignet, da der Empfänger immer weiss, ob ein beobachteter dominanter Buspegel von ihm eingestellt, oder vom Sender eingestellt wurde. Nur dies ist entscheidend dafür, ob es sich um ein zur logischen Information gehörendes Bit oder um ein Element des Taktsignals, also ein Takt-Bit handelt.

Figur 2 zeigt beispielhaft den schematischen Aufbau der zugehörigen Schaltung, basierend auf einer Open-Drain Schnittstelle mit pull-up Widerständen: Über die dargestellten Pull-Down-Transistoren 203, 206 können Sender 201 oder Empfänger 204 die Übertragungsleitung auf Masse ziehen. Geschieht das nicht, zieht wenigstens ein Pull-Up Widerstand die Leitung auf das Potenzial VDD1. Der Zustand "Potenzial der Übertragungsleitung ist Masse" ist hierbei dominant, der Zustand "Potenzial der Übertragungsleitung ist VDD1" ist rezessiv.

Der Empfänger 204 erzeugt das Taktsignal, indem die in ihm enthaltene Digital-Logik 205 periodisch den Pull-Down-Transistor 206 zwischen Sperrung und Durchlassen umschaltet. In der Sperrphase (wenn die Übertragungsleitung auf Potenzial VDD1 hochgezogen wird) kann der Sender 201 die Leitung seinerseits durch Öffnen seines Pull-Down-Transistors 203 mittels der Digital-Logik 202 auf Masse ziehen.

Diesen vom Sender 201 verursachten Wechsel des Leitungspegels erkennt der Empfänger 204 dann beispielsweise als logische Eins, während er das Ausbleiben des Wechsels des Leitungspegels in der Sperrphase seines Pull-Down-Transistors 206 als logische Null interpretiert. Die Darstellung von Eins und Null kann, wie bereits angesprochen, auch invertiert erfolgen.

Das Verfahren beziehungsweise die Schaltung kann verwendet werden, um logische Informationen, insbesondere Konfigurationsinformationen, zur Initialisierung eines Steuergerätes oder Bauelementes oder einer Busanschlusseinheit bei Systemstart an dieses zu übertragen. Das heisst, in diesem Fall kann nach dem Einschalten der Empfänger starten, das Taktsignal kontinuierlich vorzugeben, und kann auf das Einstreuen von dominanten Bits durch den Sender warten. Wenn die erwartete beziehungsweise erforderliche Anzahl von Bits empfangen wurde, kann der Empfänger die Übertragung des Taktsignals beenden.

Das Verfahren kann aber natürlich auch so ausgestaltet werden, dass der Empfänger kontinuierlich ein Taktsignal sendet. Ebenfalls möglich ist ein bedarfsweises Senden, das heisst so, dass der Empfänger mit dem Senden des Taktsignals dann beginnt, wenn er vom Sender eine bestimmte Information benötigt.

Im kontinuierlichen Fall kann der Sender die Übertragung der logischen Information beispielsweise zu einem von ihm selbst gewählten Zeitpunkt beginnen, oder auch unmittelbar nach Einschalten und wenn er das Taktsignal vom Empfänger auf der Leitung feststellt. Sendet der Sender seinerseits nicht kontinuierlich, sondern beispielsweise paketweise oder ereignisgesteuert, so ist es sinnvoll, dass zu Beginn der übertragenen logischen Information eine Paketstartinformation, beispielsweise ein führendes dominantes Bit oder auch eine Folge von festgelegten Bits übermittelt wird, um dem Empfänger den Beginn einer Übertragung zu signalisieren. Es ist auch denkbar, dass zu Beginn der logischen Information zusätzlich eine Längeninformation übermittelt wird, die angibt, wieviele logische Bits in der Folge durch den Empfänger auszuwerten sind.

Im Fall, dass der Empfänger das Taktsignal nur bedarfsweise auf die Leitung legt, wird sinnvollerweise der Sender seine Übertragung der logischen Information beginnen, wenn er eine vorgegebene, vorgebbare, oder auch nicht näher bestimmte Anzahl von Taktsignalen empfangen hat. Er kann seine Übertragung beenden, wenn die zur Übertragung vorgesehenen Daten vollständig übertragen wurden. Der Empfänger kann in diesem Fall zu einem vorgegebenen, vorgebbaren, oder auch nicht näher bestimmten Zeitpunkt beziehungsweise Anzahl von Taktsignalen, nachdem er das letzte erwartete Datum empfangen hat, das Senden des Taktsignals wieder einstellen.

## Patentansprüche

1. Verfahren zum Übertragen von logischen Informationen von einem Sender (201) zu einem Empfänger (204) über eine einzelne Leitung,
wobei der Empfänger (204) mit dem Sender (201) durch die Leitung verbunden ist,
wobei der Empfänger (204) ein erstes Signal auf die Leitung legt,
wobei das erste Signal aus abwechselnd rezessiven und dominanten Pegeln besteht,
wobei der Sender (201) ein zweites Signal auf die Leitung legt,
wobei das zweite Signal vom Sender (201) wenigstens in den Abschnitten, in denen das erste Signal einen rezessiven Pegel aufweist, auf der Leitung überlagert wird,
wobei das zweite Signal aus einer Folge von rezessiven und dominanten Pegeln besteht,
und wobei der Empfänger (204) aus dem zweiten Signal die zu empfangende logische Information ermittelt,
**dadurch gekennzeichnet, dass** der Empfänger die logische Information ermittelt, indem er in den rezessiven Abschnitten des ersten Signals die Leitung auf einen Flankenwechsel von rezessiv nach dominant prüft, wobei zu Beginn der logischen Information zusätzlich eine Längeninformation übermittelt wird, die angibt, wieviele logischen Bits in der Folge durch den Empfänger auszuwerten sind.

2. Verfahren nach Anspruch 1,
**dadurch gekennzeichnet, dass** die übertragenen logischen Informationen Konfigurationsinformationen zur Initialisierung eines Steuergerätes oder Bauelementes oder einer Busanschlusseinheit sind.

3. Verfahren nach Anspruch 1 oder 2,
**dadurch gekennzeichnet, dass** das erste Signal aus einer Folge mit vorgegebener oder vorgebbarer Anzahl von Rechteckpulsen besteht, wobei die Dauer der rezessiven und/oder die Dauer der dominanten Leitungspegel innerhalb der Folge ungefähr konstant ist.

4. Verfahren nach Anspruch 1 bis 3,
**dadurch gekennzeichnet, dass** der Sender (201) nach Empfang einer vorgegebenen oder vorgebbaren Anzahl von rezessiven und/oder dominanten Pegeln des ersten Signales mit der Überlagerung des zweiten Signales beginnt.

5. Verfahren nach Anspruch 1 bis 4,
**dadurch gekennzeichnet, dass** der Empfänger (204) nach Empfang einer vorgegebenen oder vorgebbaren Anzahl von Bits des zweiten Signales die Übertragung des ersten Signales beendet.

6. Sender (201) zum Übermitteln von logischen Informationen an einen Empfänger (204) über eine einzelne Leitung,
wobei der Sender (201) mit dem Empfänger (204) durch die Leitung verbunden ist,
wobei der Sender (201) Mittel enthält, um ein erstes Signal vom Empfänger (204) zu empfangen,
wobei das erste Signal aus abwechselnd rezessiven und dominanten Pegeln besteht,
wobei der Sender (201) Mittel aufweist, um ein zweites Signal über die Leitung zu übertragen,
wobei das zweite Signal vom Sender (201) wenigstens in den Abschnitten, in denen das erste Signal einen rezessiven Pegel aufweist, auf der Leitung überlagert wird,
wobei das zweite Signal aus einer Folge von rezessiven und dominanten Pegeln besteht,
**dadurch gekennzeichnet, dass** der Sender (201) die zu übermittelnden logischen Informationen in die rezessiven Abschnitte des ersten Signals als Flankenwechsel von rezessiv nach dominant einträgt,
wobei zu Beginn der logischen Information zusätzlich eine Längeninformation übermittelt wird, die angibt, wieviele logischen Bits in der Folge durch den Empfänger auszuwerten sind.

7. Sender (201) nach Anspruch 6 ,
**dadurch gekennzeichnet, dass** die zu übermittelnden logischen Informationen nach einem der Verfahren der Ansprüche 2 bis 5 übermittelt werden.

8. Empfänger (204) zum Empfangen von logischen Informationen von einem Sender (201) über eine einzelne Leitung,
wobei der Empfänger (204) mit dem Sender (201) durch die Leitung verbunden ist,
wobei der Empfänger (204) Mittel enthält, um ein erstes Signal an den Sender (201) zu übertragen,
wobei das erste Signals aus abwechselnd rezessiven und dominanten Pegeln besteht,
wobei der Empfänger (204) Mittel aufweist, um ein zweites Signal aus dem Pegel der Leitung auszulesen,
wobei das zweite Signal vom Sender (201) wenigstens in den Abschnitten, in denen das erste Signal einen rezessiven Pegel aufweist, auf der Leitung überlagert wird,
wobei das zweite Signal aus einer Folge von rezessiven und dominanten Pegeln besteht,
und wobei der Empfänger (204) aus dem zweiten Signal die zu empfangenden logischen Informationen ermittelt,
**dadurch gekennzeichnet, dass** der Empfänger die logische Information ermittelt, indem er in den rezessiven Abschnitten des ersten Signals die Leitung auf einen Flankenwechsel von rezessiv nach dominant prüft,
wobei zu Beginn der logischen Information zusätzlich eine Längeninformation übermittelt wird, die angibt, wieviele logischen Bits in der Folge durch den Empfänger auszuwerten sind.

9. Empfänger (204) nach Anspruch 8 ,
**dadurch gekennzeichnet, dass** die logischen Informationen nach einem der Verfahren der Ansprüche 2 bis 5 übermittelt werden.

10. Sender nach einem der Ansprüche 6 oder 7,
**dadurch gekennzeichnet, dass** er eingerichtet ist, auch als Empfänger nach einem der Ansprüche 8 oder 9 zu wirken.

## Claims

1. Method for transmitting logic information from a transmitter (201) to a receiver (204) via a single line,
wherein the receiver (204) is connected to the transmitter (201) by the line,
wherein the receiver (204) puts a first signal onto the line,
wherein the first signal consists of alternately recessive and dominant levels,
wherein the transmitter (201) puts a second signal onto the line,
wherein the second signal is overlaid on the line by the transmitter (201) at least in the sections in which the first signal has a recessive level,
wherein the second signal consists of a sequence of recessive and dominant levels,
and wherein the receiver (204) ascertains from the second signal the logic information that is to be received,
**characterized in that** the receiver ascertains the logic information by checking the line for an edge change from recessive to dominant in the recessive sections of the first signal, wherein, at the beginning of the logic information, a piece of length information is additionally transmitted that indicates how many logic bits in the sequence need to be evaluated by the receiver.

2. Method according to Claim 1,
**characterized in that** the transmitted logic information is configuration information for initializing a controller or component or a bus access unit.

3. Method according to Claim 1 or 2,
**characterized in that** the first signal consists of a sequence having a prescribed or prescribable number of square-wave pulses, wherein the duration of the recessive line levels and/or the duration of the dominant line levels within the sequence is approximately constant.

4. Method according to Claims 1 to 3,
**characterized in that** the transmitter (201) begins overlaying the second signal after reception of a prescribed or prescribable number of recessive and/or dominant levels of the first signal.

5. Method according to Claims 1 to 4,
**characterized in that** the receiver (204) terminates the transmission of the first signal after reception of a prescribed or prescribable number of bits of the second signal.

6. Transmitter (201) for transmitting logic information to a receiver (204) via a single line,
wherein the transmitter (201) is connected to the receiver (204) by the line,
wherein the transmitter (201) includes means for receiving a first signal from the receiver (204),
wherein the first signal consists of alternately recessive and dominant levels,
wherein the transmitter (201) has means for transmitting a second signal via the line,
wherein the second signal is overlaid on the line by the transmitter (201) at least in the sections in which the first signal has a recessive level, wherein the second signal consists of a sequence of recessive and dominant levels,
**characterized in that** the transmitter (201) enters the logic information to be transmitted into the recessive sections of the first signal as edge changes from recessive to dominant,
wherein, at the beginning of the logic information, a piece of length information is additionally transmitted that indicates how many logic bits in the sequence need to be evaluated by the receiver.

7. Transmitter (201) according to Claim 6, **characterized in that** the logic information to be transmitted is transmitted using one of the methods of Claims 2 to 5.

8. Receiver (204) for receiving logic information from a transmitter (201) via a single line,
wherein the receiver (204) is connected to the transmitter (201) by the line,
wherein the receiver (204) includes means for transmitting a first signal to the transmitter (201),
wherein the first signal consists of alternately recessive and dominant levels,
wherein the receiver (204) has means for reading a second signal from the level of the line,
wherein the second signal is overlaid on the line by the transmitter (201) at least in the sections in which the first signal has a recessive level,
wherein the second signal consists of a sequence of recessive and dominant levels,
and wherein the receiver (204) ascertains from the second signal the logic information that is to be received,
**characterized in that** the receiver ascertains the logic information by checking the line for an edge change from recessive to dominant in the recessive sections of the first signal,
wherein, at the beginning of the logic information, a piece of length information is additionally transmitted that indicates how many logic bits in the sequence need to be evaluated by the receiver.

9. Receiver (204) according to Claim 8, **characterized in that** the logic information is transmitted using one of the methods of Claims 2 to 5.

10. Transmitter according to either of Claims 6 and 7, **characterized in that** it is set up to also act as a receiver according to either of Claims 8 and 9.

## Revendications

1. Procédé destiné à transmettre des informations logiques d'un émetteur (201) à un récepteur (204) par l'intermédiaire d'une ligne individuelle,
dans lequel le récepteur (204) est relié à l'émetteur (201) par la ligne,
dans lequel le récepteur (204) applique un premier signal à la ligne,
dans lequel le premier signal est constitué de niveaux récessifs et dominants alternés,
dans lequel l'émetteur (201) applique un deuxième signal à la ligne,
dans lequel le deuxième signal est superposé à la ligne par l'émetteur (201), au moins dans les parties dans lesquelles le premier signal comporte un niveau récessif, dans lequel le deuxième signal est constitué d'une séquence de niveaux récessifs et dominants,
et dans lequel le récepteur (204) détermine les informations logiques à recevoir à partir du deuxième signal,
**caractérisé en ce que** le récepteur détermine les informations logiques, en vérifiant la ligne, dans les parties récessives du premier signal, pour déterminer la présence d'un changement de front de récessif à dominant, dans lequel, au début des informations logiques, une information de longueur est en outre transmise, celle-ci indiquant combien de bits logiques doivent être évalués dans la séquence par le récepteur.

2. Procédé selon la revendication 1,
**caractérisé en ce que** les informations logiques transmises sont des informations de configuration destinées à l'initialisation d'un appareil de commande ou d'un composant ou d'une unité de raccordement à un bus.

3. Procédé selon la revendication 1 ou 2, **caractérisé en ce que** le premier signal est constitué d'une séquence ayant un nombre prédéterminé ou pouvant être prédéterminé d'impulsions rectangulaires, dans lequel la durée des niveaux récessifs et/ou la durée des niveaux dominants de la ligne est approximativement constante à l'intérieur de la séquence.

4. Procédé selon la revendication 1 à 3, **caractérisé en ce que** l'émetteur (201) commence par la superposition du deuxième signal après la réception d'un nombre prédéterminé ou pouvant être prédéterminé de niveaux récessifs et/ou dominants du premier signal.

5. Procédé selon la revendication 1 à 4, **caractérisé en ce que** le récepteur (204) termine la transmission du premier signal après la réception d'un nombre prédéterminé ou pouvant être prédéterminé de bits du deuxième signal.

6. Émetteur (201) destiné à transmettre des informations logiques à un récepteur (204) par l'intermédiaire d'une ligne individuelle,
dans lequel l'émetteur (201) est relié au récepteur (204) par la ligne,
dans lequel l'émetteur (201) contient des moyens destinés à recevoir un premier signal du récepteur (204),
dans lequel le premier signal est constitué de niveaux récessifs et dominants alternés,
dans lequel l'émetteur (201) comporte des moyens destinés à transmettre un deuxième signal par l'intermédiaire de la ligne,
dans lequel le deuxième signal, au moins dans les parties dans lesquelles le premier signal comporte un niveau récessif, est superposé à la ligne par l'émetteur (201), dans lequel le deuxième signal est constitué d'une séquence de niveaux récessifs et dominants,
**caractérisé en ce que** l'émetteur (201) introduit les informations logiques à transmettre dans les parties récessives du premier signal en tant que changement de front de récessif à dominant,
dans lequel une information de longueur est en outre transmise au début des informations logiques, celle-ci indiquant combien de bits logiques doivent être évalués dans la séquence par le récepteur.

7. Émetteur (201) selon la revendication 6, **caractérisé en ce que** les informations logiques à transmettre sont transmises conformément à l'un des procédés des revendications 2 à 5.

8. Récepteur (204) destiné à recevoir des informations logiques d'un émetteur (201) par l'intermédiaire d'une ligne individuelle,
dans lequel le récepteur (204) est relié à l'émetteur (201) par la ligne,
dans lequel le récepteur (204) contient des moyens destinés à transmettre un premier signal à l'émetteur (201),
dans lequel le premier signal est constitué de niveaux récessifs et dominants alternés,
dans lequel le récepteur (204) comporte des moyens destinés à lire un deuxième signal à partir du niveau de la ligne,
dans lequel le deuxième signal, au moins dans les parties dans lesquelles le premier signal comporte un niveau récessif, est superposé à la ligne par l'émetteur (201), dans lequel le deuxième signal est constitué d'une séquence de niveaux récessifs et dominants,
et dans lequel le récepteur (204) détermine les informations logiques à recevoir à partir du deuxième signal,
**caractérisé en ce que** le récepteur détermine les informations logiques en vérifiant la ligne, dans les parties récessives du premier signal, pour déterminer la présence d'un changement de front de récessif à dominant, dans lequel une information de longueur est en outre transmise au début des informations logiques, celle-ci indiquant combien de bits logiques doivent être évalués dans la séquence par le récepteur.

9. Récepteur (204) selon la revendication 8,
**caractérisé en ce que** les informations logiques sont transmises conformément à l'un des procédés des revendications 2 à 5.

10. Émetteur selon l'une quelconque des revendications 6 ou 7,
**caractérisé en ce qu'**il est également conçu pour fonctionner en tant que récepteur selon l'une quelconque des revendications 8 ou 9.
